(19) Europäisches Patentamt
European Patent Office
Office européen des brevets

(11) **EP 4 663 708 A1**

(12) **EUROPÄISCHE PATENTANMELDUNG**

(43) Veröffentlichungstag:
**17.12.2025 Patentblatt 2025/51**

(21) Anmeldenummer: **25184924.6**

(22) Anmeldetag: **24.06.2025**

(51) Internationale Patentklassifikation (IPC):
**C09D 5/02** *(2006.01)* **C09D 7/61** *(2018.01)*
**C09D 7/40** *(2018.01)* **C09D 5/34** *(2006.01)*

(52) Gemeinsame Patentklassifikation (CPC):
**C09D 5/028; C09D 5/34; C09D 7/61; C09D 7/69;**
C08K 3/012; C08K 2201/005

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **03.06.2024 DE 102024001797**

(71) Anmelder: **STO SE & Co. KGaA**
**79780 Stühlingen (DE)**

(72) Erfinder:
• **Gampp, Elmar**
**79848 Bonndorf (DE)**
• **Tritschler, Kevin**
**77859 Schluchsee (DE)**
• **Färber, Rainer**
**79879 Wutach (DE)**

(74) Vertreter: **Gottschalk, Matthias**
**Gottschalk Maiwald**
**Patentanwalts- und Rechtsanwalts- (Schweiz)**
**GmbH**
**Florastrasse 14**
**8008 Zürich (CH)**

(54) **ZUSAMMENSETZUNG ZUR AUSBILDUNG EINES TROCKENFILMS**

(57) Die vorliegende Erfindung betrifft eine Zusammensetzung, umfassend (a) mindestens ein organisches Polymer-Bindemittel, (b) eine mindestens bimodale Füllstoffkombination mit (i) mindestens einem Feinfüllstoff (A) mit einen Medianwert der Partikelgröße $D_{50}$ von mehr als 15 μm bis 40 μm, und (ii) mindestens einem Feinstfüllstoff (B) mit einen Medianwert der Partikelgröße $D_{50}$ von 1,0 μm bis 15 μm, (c) ein Hydrophobierungsmittel auf Siloxan-Basis, und (d) Wasser. Die vorliegende Erfindung betrifft ferner einen Trockenfilm, erhältlich oder erhalten mittels der Zusammensetzung, sowie ein Verfahren zur Herstellung des Trockenfilms.

EP 4 663 708 A1

**Beschreibung**

Die vorliegende Erfindung betrifft eine Zusammensetzung, umfassend (a) mindestens ein organisches Polymer-Bindemittel, (b) eine mindestens bimodale Füllstoffkombination mit (i) mindestens einem Feinfüllstoff (A) mit einen Medianwert der Partikelgröße $D_{50}$ von mehr als 15 $\mu$m bis 40 $\mu$m, und (ii) mindestens einem Feinstfüllstoff (B) mit einen Medianwert der Partikelgröße $D_{50}$ von 1,0 $\mu$m bis 15 $\mu$m, (c) ein Hydrophobierungsmittel auf Siloxan-Basis, und (d) Wasser.

Hintergrund der Erfindung

Zusammensetzungen, wie etwa Spachtelmassen, zum Aufbringen in Formen sind im Stand der Technik bekannt. Derartige Zusammensetzungen werden zur Herstellung von (selbsttragenden) Trockenfilmen verwendet, die z.B. zu dekorativen Zwecken als Endbelag auf Baumaterialien aufgebracht werden (beispielsweise als Paneele z.B. in Holzimitat-Optik, etc.).

Bei herkömmlichen Spachtelmassen besteht jedoch aus verschiedener Hinsicht Verbesserungsbedarf. Zum einen ist es wünschenswert, dass die erhaltenen Trockenfilme eine gute Oberflächenqualität ergeben, d.h. porenfrei sind und keine sogenannten *"Nadelstiche"* aufweisen. Zum anderen sollen die erhaltenen Trockenfilme eine geringe Wasseraufnahme zeigen. Eine zu hohe Wasseraufnahme ist aus verschiedenen Gründen unerwünscht. Beispielsweise kann es durch eine hohe Wasseraufnahme zum Eindringen von Feuchtigkeit in die unter dem Trockenfilm befindliche Baustruktur kommen. Gleichzeitig sollen die erhaltenen Trockenfilme eine gute Brandsicherheit aufweisen. Darüber hinaus ist es wünschenswert, dass die Trockenfilme vorzugsweise auf wirtschaftliche Weise, beispielsweise in einem automatisierten Verfahren, hergestellt werden können.

Eine Aufgabe der vorliegenden Erfindung ist es verbesserte Zusammensetzungen zur Herstellung von Trockenfilmen bzw. verbesserte Trockenfilme bereitzustellen.

Zusammenfassung der Erfindung

Die vorliegende Erfindung betrifft eine Zusammensetzung, umfassend

(a) mindestens ein organisches Polymer-Bindemittel,
(b) eine mindestens bimodale Füllstoffkombination mit

(i) mindestens einem Feinfüllstoff (A) mit einen Medianwert der Partikelgröße $D_{50}$, bestimmt gemäß DIN ISO 9276-1:2004-09 und ISO 9276-2:2014-05, von mehr als 15 $\mu$m bis 40 $\mu$m, und
(ii) mindestens einem Feinstfüllstoff (B) mit einen Medianwert der Partikelgröße $D_{50}$ von 1,0 $\mu$m bis 15 $\mu$m,

(c) ein Hydrophobierungsmittel auf Siloxan-Basis, und
(d) Wasser.

Die vorliegende Erfindung betrifft ferner einen Trockenfilm, erhältlich mittels der erfindungsgemäßen Zusammensetzung.

Ferner betrifft die vorliegende Erfindung ein Verfahren zur Herstellung eines Trockenfilms, wobei das Verfahren umfasst:

(a) Aufbringen der erfindungsgemäßen Zusammensetzung auf eine Negativ-Form, und
(b) Trocknen lassen der Zusammensetzung.

Weitere Ausführungsformen der vorliegenden Erfindung sind in der folgenden detaillierten Beschreibung und den angefügten Ansprüchen ausgeführt.

Detaillierte Beschreibung der Erfindung

Wie vorstehend ausgeführt betrifft die vorliegende Erfindung eine Zusammensetzung, umfassend (a) mindestens ein organisches Polymer-Bindemittel, (b) eine mindestens bimodale Füllstoffkombination mit (i) mindestens einem Feinfüllstoff (A) mit einen Medianwert der Partikelgröße $D_{50}$, bestimmt gemäß DIN ISO 9276-1:2004-09 und ISO 9276-2:2014-05, von mehr als 15 $\mu$m bis 40 $\mu$m, und (ii) mindestens einem Feinstfüllstoff (B) mit einen Medianwert der Partikelgröße $D_{50}$ von 1,0 $\mu$m bis 15 $\mu$m, (c) ein Hydrophobierungsmittel auf Siloxan-Basis, und (d) Wasser.

Gemäß der vorliegenden Erfindung enthält die Zusammensetzung mindestens ein organisches Polymer-Bindemittel. Organische Polymer-Bindemittel werden typischerweise in Form einer Polymerdispersion eingesetzt. Grundsätzlich kommen gemäß der Erfindung alle organischen Polymer-Bindemittel in Betracht, die üblicherweise in einem Putz- oder Haftgrund eingesetzt werden. Exemplarisch seien als geeignete organische Polymer-Bindemittel Vinylacetat/Ethylen-Copolymere, Copolymere auf Basis von Vinylaromaten, insbesondere Styrol, und Acrylaten oder auf Basis von Reinacrylaten. gegebenenfalls auch mit (Meth)acrylsäure, d.h. Acryl- und/oder Methacrylsäure, als Comonomerbausteine.

Demgemäß wird in einer bevorzugten Ausführungsform der Erfindung das mindestens eine organische Polymer-Bindemittel ausgewählt aus organischen Polymer-Bindemittel auf Basis von Vinylacetat/Ethylen-Copolymeren, Copolymeren auf Basis von Vinylaromaten, und/oder Homo- oder Copolymeren auf Basis von (Meth)acrylaten. In einer weiterhin bevorzugten Ausführungsform wird das mindestens eine organische Polymer-Bindemittel ausgewählt aus Homo- oder Copolymeren auf Basis von Reinacrylaten und/oder auf Basis von Styrolacrylatcopolymeren. Reinacrylate umfassen Homo- und insbesondere Copolymere von (Meth)acrylaten, d.h. Acrylaten und/oder Methacrylaten.

Das organische Polymer-Bindemittel wird in einer zweckmäßigen Ausgestaltung in Form einer wässrigen Bindemitteldispersion eingesetzt. Demgemäß kommen als polymere organische Bindemittel insbesondere auch solche in Frage, bei denen die in Wasser dispergierten oder dispergierbaren Polymere aus gleichen oder verschiedenen Monomeren gebildet sind, wobei mindestens eines der Monomere ein Acrylsäureester, Methacrylsäurester, Acrylsäure, Methacrylsäure, Vinylacetat, Vinylchlorid, Versatat, Acrylnitril oder eine vinylaromatische Verbindung darstellt. In einer zweckmäßigen Ausgestaltung basiert das in Wasser dispergierte oder dispergierbare Polymer dabei auf i) Acrylsäureestern und Vinylaromaten, insbesondere Styrol, oder auf ii) Acrylsäureestern und Vinylestern mindestens einer Kochsäure (tertiäre gesättigte Monocarbonsäure), insbesondere der Versatinsäure, und gegebenenfalls Vinylaromaten, insbesondere Styrol.

In einer bevorzugten Ausführungsform liegt das mindestens eine organische Polymer-Bindemittel in der Zusammensetzung in einer Gesamtmenge von 1,0 Gew.% bis 12,0 Gew.%, bezogen auf den Feststoffgehalt des organischen Polymer-Bindemittels und das Gesamtgewicht der Zusammensetzung, vor. In einer stärker bevorzugten Ausführungsform liegt das mindestens eine organische Polymer-Bindemittel in der Zusammensetzung in einer Gesamtmenge von 2,0 Gew.% bis 10,0 Gew.%, noch stärker bevorzugt in einer Gesamtmenge von 3,0 Gew.% bis 8,0 Gew.%, jeweils bezogen auf den Feststoffgehalt des organischen Polymer-Bindemittels und das Gesamtgewicht der Zusammensetzung.

Die erfindungsgemäße Zusammensetzung umfasst ferner eine mindestens bimodale Füllstoffkombination. Die mindestens bimodale Füllstoffkombination umfasst mindestens einen Feinfüllstoff (A) mit einen Medianwert der Partikelgröße $D_{50}$ von mehr als 15 $\mu$m bis 40 $\mu$m, und mindestens einem Feinstfüllstoff (B) mit einen Medianwert der Partikelgröße $D_{50}$ von 1,0 $\mu$m bis 15,0 $\mu$m.

Der $D_{50}$-Wert, der auch Halbwertskorngröße oder Medianwert genannt wird, und gemäß der vorliegenden Erfindung als *"Medianwert der Partikelgröße $D_{50}$"* bezeichnet wird, gibt die mittlere Partikelgröße eines teilchenförmigen Feststoffs an, so dass der Anteil der Partikel, die größer als der $D_{50}$-Wert sind, gleich dem Anteil der Partikel ist, die kleiner als der $D_{50}$-Wert sind. Die Bestimmung dieser Werte erfolgt erfindungsgemäß bevorzugt nach DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnungen von mittleren Partikelgrößen/- durchmessern und Momenten aus Partikelgrößenverteilungen). Dabei kann der Mastersizer 3000 der Firma Malvern Instruments Limited als Instrument zur Größenbestimmung eingesetzt werden. In der Regel können diese Werte aber auch einfach einem technischen Datenblatt entnommen werden.

In einer bevorzugten Ausführungsform weist der mindestens eine Feinfüllstoff (A) einen Medianwert der Partikelgröße $D_{50}$ von 16,0 $\mu$m bis 32 $\mu$m auf. Stärker bevorzugt weist der mindestens eine Feinfüllstoff (A) einen Medianwert der Partikelgröße $D_{50}$ von 18,0 $\mu$m bis 28,0 $\mu$m auf.

Der mindestens eine Feinfüllstoff (A) ist in der erfindungsgemäßen Zusammensetzung vorzugsweise in einer Gesamtmenge von 4,0 bis 40,0 Gew.%, bezogen auf das Gesamtgewicht der Zusammensetzung, enthalten. Vorzugsweise ist der mindestens eine Feinfüllstoff (A) in einer Gesamtmenge von 5,0 bis 30,0 Gew.%, bezogen auf das Gesamtgewicht der Zusammensetzung, stärker bevorzugt von 6,0 bis 20,0 Gew.%, enthalten.

Der mindestens eine Feinfüllstoff (A) wird beispielsweise ausgewählt aus silikatischen, karbonatischen, oxidischen, hydroxidischen und/oder sulfatischen Füllstoffen. Illustrative Beispiele umfassen Quarz, Cristobalit, Kalkstein, Marmor, Dolomit, Aluminiumhydroxid und/oder Bariumsulfate. In einer Ausführungsform wird der mindestens eine Feinfüllstoff (A) aus karbonatischen und/oder hydroxydischen Füllstoffen ausgewählt. Illustrative Beispiele hierfür Calciumcarbonat, Calcit, Kalkstein, Marmor, Dolomit und/oder Aluminiumhydroxid. In einer Ausführungsform wird der Feinfüllstoff (A) aus hydroxydischen Füllstoffen, wie etwa Aluminiumhydroxid ausgewählt.

Die Auswahl von silikatischen und/oder oxidischen Füllstoffe als Feinfüllstoff (A) ist zwar erfindungsgemäß möglich aber weniger bevorzugt. Silikatische und oxidische Füllstoffe sind oftmals relativ hart (in Bezug auf die Mohs-Härte) und können deshalb bei der Applikation der Zusammensetzung, beispielsweise bei Airless-Applikation, zu einer verstärkten Abrasion an den Düsen führen. Vorzugsweise werden gemäß der Erfindung, wie vorstehend ausgeführt, carbonatische und/oder hydroxidische Füllstoffe als Feinfüllstoff (A) eingesetzt, da diese einerseits relativ *"weich"* sind (in Bezug auf die Mohs-Härte) und andererseits maßgeblich zur Verringerung des PCS-Wertes beitragen.

Demgemäß weist in einer Ausführungsform der mindestens eine Feinfüllstoff (A) eine Mohs-Härte von 4,0 oder weniger auf. In einer bevorzugten Ausführungsform weist der mindestens eine Feinfüllstoff (A) eine Mohs-Härte von 3,5 oder weiniger, stärker bevorzugt von 3,0 oder weniger auf.

Für die Auswahl des Feinfüllstoffs (A) spielt in bevorzugten Ausführungsformen auch der PCS-Wert eine Rolle. PCS steht für *"Pouvoir Calorifique Supérieur"* und bedeutet so viel wie Brutto-Verbrennungswärme. Der PCS-Wert wird bei der Berechnung der Brennbarkeit von Baustoffen herangezogen. Gemessen wird der PCS-Wert nach DIN EN ISO 1716 in einem Bombenkalorimeter, beispielsweise einem IKA C 2000. Die Einheit ist MJ/kg. Sogenannte Flammschutzmittel weisen einen negativen PCS-Wert bzw. eine negative Brutto-Verbrennungswärme auf. Das heißt, dass Flammschutzmittel bei der Verbrennung Energie aufnehmen bzw. verbrauchen und nicht freisetzen.

Bevorzugt weist der in der erfindungsgemäßen Zusammensetzung enthaltene mindestens eine Feinfüllstoff (A) zumindest in Teilen einen negativen PCS-Wert auf. Gleiches gilt für den weiter nachstehend beschriebenen mindestens einen Feinstfüllstoff (B) sowie für die in der Zusammensetzung enthaltene mindestens bimodale Füllstoffkombination als Ganzes.

Ein Feinfüllstoff mit einem negativem PCS-Wert dient zugleich als Flammschutzmittel, so dass auf die separate Zugabe eines Flammschutzmittels verzichtet werden kann. Besonders bevorzugt werden Calciumcarbonat, Calcit, Kalkstein, Marmor, Dolomit und/oder Aluminiumhydroxid als Feinfüllstoff (A) eingesetzt. Calciumcarbonat weist beispielsweise - je nach Typ, Reinheit und Beschaffenheit -einen PCS-Wert [MJ/kg] zwischen -0,8 und -1,21 auf. Der PCS-Wert von Aluminiumhydroxid liegt - je nach Reinheit und Beschaffenheit - zwischen -0,52 und -1,1.

Daher trägt die Verwendung von speziell karbonatischen Füllstoffen und/oder hydroxidischen Füllstoffen, wie etwa Aluminiumhydroxid, zu verbesserten Brandschutzwerten der erfindungsgemäßen Zusammensetzungen bei.

Demgemäß beträgt der Anteil an Feinfüllstoff (A) mit einem PCS-Wert von 0 MJ/kg oder weniger (vorzugsweise mit einem PCS-Wert -0,3 MJ/kg oder weniger, stärker bevorzugt von -0,4 MJ/kg oder weniger, noch stärker bevorzugt -0,5 MJ/kg oder weniger) in einer Ausführungsform mehr als 40 Gew.-%, bezogen auf das Gesamtgewicht an Feinfüllstoff (A), vorzugsweise mehr als 50 Gew.-%, stärker bevorzugt mehr als 60 Gew.-%.

In einer Ausführungsform weist der mindestens eine Feinfüllstoff (A) einen PCS-Wert, bestimmt gemäß DIN EN ISO 1716, von weniger als 0 MJ/kg auf. In einer bevorzugten Ausführungsform weist der mindestens eine Feinfüllstoff (A) einen PCS-Wert von -0,3 MJ/kg oder weniger, stärker bevorzugt von -0,4 MJ/kg oder weniger, noch stärker bevorzugt von -0,5 MJ/kg oder weniger, auf.

Die die in der erfindungsgemäßen Zusammensetzung enthaltene mindestens bimodale Füllstoffkombination umfasst ferner mindestens einem Feinstfüllstoff (B). Der mindestens eine Feinstfüllstoff (B) weist einen Medianwert der Partikelgröße $D_{50}$ von 1,0 $\mu$m bis 15,0 $\mu$m auf. In einer bevorzugten Ausführungsform weist der mindestens eine Feinstfüllstoff (B) einen Medianwert der Partikelgröße $D_{50}$ von 2,0 $\mu$m bis 14,0 $\mu$m auf, vorzugsweise von 3,0 $\mu$m bis 12,0 $\mu$m.

Der mindestens eine Feinstfüllstoff (B) ist in der erfindungsgemäßen Zusammensetzung vorzugsweise in einer Gesamtmenge von 20,0 bis 75,0 Gew.%, bezogen auf das Gesamtgewicht der Zusammensetzung, vorhanden. Vorzugsweise ist der mindestens eine Feinstfüllstoff (B) in einer Gesamtmenge von 30,0 bis 70,0 Gew.%, stärker bevorzugt von 40,0 bis 66,0 Gew.%, enthalten, jeweils bezogen auf das Gesamtgewicht der Zusammensetzung. In einer Ausführungsform wird der Feinstfüllstoff (B) aus carbonatischen Füllstoffen, wie etwa Calciumcarbonat ausgewählt.

In einer Ausführungsform weist der mindestens eine Feinstfüllstoff (B) eine Mohs-Härte von 4,0 oder weniger auf. In einer bevorzugten Ausführungsform weist der mindestens eine Feinfüllstoff (A) eine Mohs-Härte von 3,5 oder weiniger, stärker bevorzugt von 3,0 oder weniger auf.

In einer Ausführungsform beträgt der Anteil an Feinstfüllstoff (B) mit einem PCS-Wert von 0 MJ/kg oder weniger (vorzugsweise mit einem PCS-Wert -0,5 MJ/kg oder weniger, stärker bevorzugt von -0,6 MJ/kg oder weniger, noch stärker bevorzugt -0,7 MJ/kg oder weniger) mehr als 40 Gew.-%, bezogen auf das Gesamtgewicht an Feinstfüllstoff (B), vorzugsweise mehr als 50 Gew.-%, stärker bevorzugt mehr als 60 Gew.-%.

Gemäß in einer Ausführungsform weist der mindestens eine Feinstfüllstoff (B) einen (negativen) PCS-Wert, bestimmt gemäß DIN EN ISO 1716, von weniger als 0 MJ/kg auf. In einer bevorzugten Ausführungsform weist der mindestens eine Feinstfüllstoff (B) einen PCS-Wert von -0,5 MJ/kg oder weniger, stärker bevorzugt von -0,6 MJ/kg oder weniger, noch stärker von -0,7 MJ/kg, auf.

Der Feinstfüllstoff (B) wird gemäß der Erfindung in Kombination zusammen mit dem Feinfüllstoff (A) in einer mindestens bimodalen Füllstoffkombination eingesetzt. Die mindestens bimodale Füllstoffkombination mit Feinfüllstoff (A) und Feinstfüllstoff (B) mit den vorstehend angegebenen Medianwerten der Partikelgrößen $D_{50}$ ermöglicht eine besonders dichte Packung der Füllstoffe, da sich die Feinstfüllstoffe (B) in die verbleibenden Räume zwischen den Feinfüllstoffen (A) setzen. Je dichter die Packung ist, desto besser wird eine Struktur erreicht, die eine niedrige Wasseraufnahme aufweist, da weniger Raum zur Verfügung steht, der beispielsweise mit Bindemittel oder mit Wasser gefüllt werden kann.

Zur Festlegung der Medianwerte der Partikelgrößen $D_{50}$ der einzelnen Füllstoffe in der mindestens bimodalen Füllstoffkombination kann vom Medianwert der Partikelgröße $D_{50}$ der Fraktion der Feinfüllstoffe (A) ausgegangen werden. Die Feinfüllstoffe (A) bilden innerhalb der Packung eine Art Grundgerüst aus. In diesem Grundgerüst verbleiben zwischen den Feinfüllstoffen (A) Räume, deren Größe sich berechnen bzw. abschätzen lässt, so dass hiernach die Größe der Feinstfüllstoffe (B) festlegbar ist.

Bei der Berechnung der verbleibenden Räume zwischen den Füllstoffen können die Partikel einer Größenfraktion vereinfacht bzw. modellhaft als Kugeln gleicher Größe betrachtet werden, wobei die Größe dem jeweiligen Medianwert der Partikelgröße $D_{50}$ entspricht. In der Realität weicht die Form der Partikel von der Kugelform ab. Zudem haben nicht alle Füllstoffe einer Größenfraktion die gleiche Größe, sondern liegen ebenfalls in einer Größenverteilung vor. All dies kann jedoch bei der Berechnung der verbleibenden Räume bzw. bei der Bestimmung des Medianwert der Partikelgröße $D_{50}$ der einzelnen Größenfraktionen vernachlässigt werden.

In einer möglichst dichten Kugelpackung bilden sich Tetraederlücken und Oktaederlücken aus. In eine Oktaederlücke zwischen Partikeln/Kugeln eines Feinfüllstoffs mit dem Durchmesser D passt eine kleinere Kugel mit einem Durchmesser d, wenn d im Bereich 0,155*D und 0,414*D liegt. Maßgebender sind jedoch die Tetraederlücken. In eine Tetraederlücke zwischen Partikeln/Kugeln eines Feinfüllstoffs mit dem Durchmesser D passt eine kleinere Kugel mit einem Durchmesser d, wenn d im Bereich 0,225*D und 0,291*D liegt.

Verallgemeinernd lässt sich sagen, dass der Medianwert der Partikelgröße $D_{50}$ des Feinstfüllstoffs (B) zwischen 0,155 und 0,414, vorzugsweise zwischen 0,225 und 0,414, weiterhin vorzugsweise zwischen 0,225 und 0,291, des Medianwerts der Partikelgröße $D_{50}$ des Feinfüllstoffs (A) liegen sollte, um eine möglichst dichte Packung zu erhalten. Demgemäß betrifft die vorliegende Erfindung in einer Ausführungsform eine Zusammensetzung wie vorstehend beschrieben, umfassend eine mindestens bimodale Füllstoffkombination, wobei der Medianwert der Partikelgröße $D_{50}$ des Feinstfüllstoffs (B) vorzugsweise 0,155 bis 0,414 des Medianwerts der Partikelgröße $D_{50}$ des Feinfüllstoffs (A) beträgt, und wobei stärker bevorzugt der Medianwert der Partikelgröße $D_{50}$ des Feinstfüllstoffs (B) 0,225 bis 0,414, noch stärker bevorzugt 0,225 bis 0,291 des Medianwerts der Partikelgröße $D_{50}$ des Feinfüllstoffs (A) beträgt.

In einer bevorzugten Ausführungsform der Erfindung umfasst die mindestens bimodale Füllstoffkombination der Zusammensetzung Feinfüllstoff (A) und Feinstfüllstoff (B), wie vorstehend beschrieben, wobei das Gewichtsverhältnis der Gesamtmasse des Feinfüllstoffs (A) in der Zusammensetzung zu der Gesamtmasse des Feinstfüllstoffs (B) in der Zusammensetzung 1 : 1-15 beträgt. In einer weiter bevorzugten Ausführungsform umfasst die mindestens bimodale Füllstoffkombination Feinfüllstoff (A) und Feinstfüllstoff (B), wobei vorzugsweise das Gewichtsverhältnis der Gesamtmasse des Feinfüllstoffs (A) in der Zusammensetzung zu der Gesamtmasse des Feinstfüllstoffs (B) in der Zusammensetzung 1 : 2-12, stärker bevorzugt 1 : 3-8, wie beispielsweise 1 : 6, beträgt.

In einer bevorzugten Ausführungsform der Erfindung umfasst die mindestens bimodale Füllstoffkombination der Zusammensetzung Feinfüllstoff (A) und Feinstfüllstoff (B), wie vorstehend beschrieben, wobei das Volumenverhältnis des Gesamtvolumens des Feinfüllstoffs (A) in der Zusammensetzung zu dem Gesamtvolumen des Feinstfüllstoffs (B) in der Zusammensetzung 1 : 1-15 beträgt. In einer weiter bevorzugten Ausführungsform umfasst die mindestens bimodale Füllstoffkombination Feinfüllstoff (A) und Feinstfüllstoff (B), wobei vorzugsweise das Volumenverhältnis des Gesamtvolumens des Feinfüllstoffs (A) in der Zusammensetzung zu dem Gesamtvolumen des Feinstfüllstoffs (B) in der Zusammensetzung 1 : 2-12, stärker bevorzugt 1 : 3-8, wie beispielsweise 1 : 6, beträgt.

In einer weiteren Ausführungsform der Erfindung beträgt die mittlere Gesamt-Ölzahl aller Füllstoffe in der Zusammensetzung 22 g/100g oder weniger. Die Ölzahl von Pigmenten oder Füllstoffen ist eine in der Lack- und Farbenindustrie häufig verwendete Kenngröße. Sie stellt ein Maß für den Bindemittelbedarf des Pigments oder Füllstoffs dar. Gemäß der vorliegenden Erfindung beziehen sich Angaben zu Ölzahlen auf eine Bestimmung gemäß DIN EN ISO 787-5. Nach DIN EN ISO 787-5 versteht man unter der Ölzahl diejenige Menge an tropfenweise zugegebenem Lackleinöl einer festgelegten Säurezahl, die 100 g Pigment oder Füllstoff beim Kneten mit einem Spatel bis zum Erreichen einer zusammenhängenden, kittartig-steifen Paste absorbiert (*"Netzpunkt"*). Die Ölzahl korreliert mit der spezifischen Oberfläche eines Füllstoffs. Die spezifische Oberfläche wiederum wird einerseits bestimmt durch die Partikelgröße des Füllstoffs und andererseits durch die Morphologie der einzelnen Füllstoffpartikel. D.h. Füllstoffe, die aus sehr feinen und kleinen Partikeln bestehen und/oder lamellare oder poröse Partikelformen aufweisen, haben eine höhere spezifische Oberfläche (und damit eine höhere Ölzahl) als Füllstoffe bestehend aus größeren und kompakten Partikeln mit nodularer, rundlicher Partikelform. Nodulare Füllstoffe weisen bei gleicher Feinheit eine niedrigere Ölzahl auf als lamellare Füllstoffe. Füllstoffe, die in etwa gleiche Feinheit (sprich Partikelgrößen, $D_{50}$-Werte) aufweisen, sich aber in der Ölzahl stark unterscheiden, müssen demzufolge unterschiedliche Partikelstrukturen (sprich eine unterschiedliche Morphologie) haben. Analoges gilt natürlich auch umgekehrt. Zur Berechnung der mittleren Gesamt-Ölzahl werden die Ölzahlen und Gewichtsanteile der einzelnen Füllstoffe, die in der Zusammensetzung vorliegen, herangezogen. Der Gesamtgewichtsanteil aller Füllstoffe in der Zusammensetzung wird dabei auf 100% normiert. Zum Beispiel ergibt sich für eine Zusammensetzung, die insgesamt 54 Gew.% ($\approx$100%) an Füllstoffen enthält - davon insgesamt 15 Gew.% ($\approx$27,8%) an Feinfüllstoff mit einer Ölzahl von 14 g/100g und insgesamt 39 Gew.% ($\approx$53,7%) an Feinstfüllstoff mit einer Ölzahl von 18 g/100g - eine mittlere Gesamt-Ölzahl gemäß folgender Gleichung:

$$(0{,}278 * 14) + (0{,}537 * 18) = 13{,}6$$

Die mittlere Gesamt-Ölzahl aller Füllstoffe kann auch experimentell bestimmt werden, indem einfach die entsprechende Mischung der Füllstoffe zur Bestimmung der Ölzahl nach DIN EN ISO 787-5 herangezogen wird.

Vorzugsweise beträgt die mittlere Gesamt-Ölzahl aller Füllstoffe in der Zusammensetzung 20 g/100g oder weniger, stärker bevorzugt 18 g/100g oder weniger.

In der Zusammensetzung der vorliegenden Erfindung ist die mindestens bimodale Füllstoffkombination vorzugsweise in einer Gesamtmenge von 40,0 bis 90,0 Gew.%, bezogen auf das Gesamtgewicht der Zusammensetzung, vorhanden. In einer weiteren bevorzugten Ausführungsform ist die mindestens bimodale Füllstoffkombination in einer Gesamtmenge von 45,0 bis 85,0 Gew.%, stärker bevorzugt 50,0 bis 80,0 Gew.%, vorhanden.

In einer weiteren Ausführungsform ist die Zusammensetzung im Wesentlichen frei von Füllstoffen oder Füllstofffraktionen, die einen Medianwert der Partikelgröße $D_{50}$, bestimmt gemäß DIN ISO 9276-1:2004-09 und ISO 9276-2:2014-05, von mehr als 40 $\mu$m aufweisen. Gemäß dieser Ausführungsform der Erfindung wird die Verwendung von gröberen Füllstoffen bzw. Füllstofffraktionen mit einem Medianwert der Partikelgröße $D_{50}$ von mehr als 40 $\mu$m im Wesentlichen ausgeschlossen. Der Begriff *"im Wesentlichen frei"* gemäß der Erfindung bedeutet in diesem Zusammenhang, dass auf eine bewusste Zugabe von Füllstoffen oder Füllstofffraktionen mit einem Medianwert der Partikelgröße $D_{50}$ von mehr als 40 $\mu$m verzichtet wird und/oder dass der Gehalt an Füllstoffen oder Füllstofffraktionen mit einem Medianwert der Partikelgröße $D_{50}$ von mehr als 40 $\mu$m in der Zusammensetzung bei weniger als 1,0 Gew.%, bezogen auf das Gesamtgewicht der Zusammensetzung, wie etwa 0,5 Gew.% oder weniger oder 0,1 Gew.% oder weniger, liegt. In einer Ausführungsform ist die Zusammensetzung frei ist von Füllstoffen oder Füllstofffraktionen mit einem Medianwert der Partikelgröße $D_{50}$ von mehr als 40 $\mu$m. Eine gröbere Füllstofffraktion, die gemäß dieser Ausführungsform im Wesentlichen ausgeschlossen ist, könnte die Ausbildung einer möglichst dichten Packung stören oder die Applikationsfreundlichkeit der Zusammensetzung, wie etwa beim nachstehend beschriebenen Airless-Spritzen vermindern.

Die Zusammensetzung der vorliegenden Erfindung enthält ferner ein Hydrophobierungsmittel auf Siloxan-Basis. In einer Ausführungsform ist das Hydrophobierungsmittel auf Siloxan-Basis ausgewählt aus Polysiloxanen in Form von Silikonharzen oder Silikonölen. Polysiloxane können aus mono-, di-, tri- und/oder quartärfunktionalen Einheiten aufgebaut sein und können zu zwei- oder dreidimensionalen Strukturen vernetzen. Silikonharze sind Polysiloxane, die neben mono- und difunktionalen Einheiten auch aus tri- und ggfs. quartärfunktionalen Einheiten aufgebaut sind.

In einer bevorzugten Ausführungsform werden gemäß der Erfindung lineare Silikonöle als Hydrophobierungsmittel eingesetzt. Silikonöle werden gelegentlich mit flüssigen Silikonharzen in einen Topf geworfen oder verwechselt. Silikonöle in Sinne der Erfindung sind in der Regel linear (in seltenen Fällen cyclisch) und ausschließlich aus mono- und difunktionalen Einheiten aufgebaut. Sie enthalten keine tri- oder quartärfunktionale Einheiten wie die Silikonharze und können deshalb nicht über Si-O-Si-Brücken vernetzen. Silikonöle sind, wie es die Bezeichnung *"Öl"* schon besagt, bei 20°C/1 bar flüssig bis zähflüssig.

Die Seitengruppen der erfindungsgemäß bevorzugt verwendeten Silikonöle sind weitgehend unpolarer Natur, beispielsweise Hydrocarbyl-Gruppen, können aber vereinzelt reaktive Gruppen (beispielsweise alkylierte Aminogruppen) tragen. Vorzugsweise enthält das Silikonöl hauptsächlich Hydrocarbylseitenketten, z.B. $C_1$ bis $C_{20}$ Hydrocarbylseitenketten, noch bevorzugter hauptsächlich Alkylseitenketten, z.B. $C_1$ bis $C_{20}$ Alkylseitenketten. Durch die Abwesenheit von polaren Seitenketten weist das Silikonöl stark unpolaren Charakter auf. Normalerweise enthalten die Alkylketten nicht mehr als 5 Kohlenstoffatome. Verzweigte und lineare Polysiloxane mit methyl-, ethyl- oder propyl-Seitenketten sind besonders bevorzugt.

*"Hauptsächlich unpolare Seitenketten"* bedeutet gemäß der vorliegenden Erfindung, dass bei der Synthese der Silikonöle keine polaren Seitenketten absichtlich eingeführt werden.

*"Hauptsächlich Hydrocarbylseitenketten"* bedeutet gemäß der vorliegenden Erfindung, dass bei der Synthese der Silikonöle keine Seitenketten außer Hydrocarbylseitenketten absichtlich eingeführt werden.

*"Hauptsächlich Alkylseitenketten"* bedeutet gemäß der vorliegenden Ergründung, dass bei der Synthese der Silikonöle keine Seitenketten außer Alkylseitenketten absichtlich eingeführt werden. Die Alkylseitenketten können ihrerseits aber vereinzelt reaktive Gruppen (beispielsweise alkylierte Aminogruppen) tragen. Diese reaktive Gruppen sind aber nicht in der Lage, zu einer zwei- oder dreidimensionalen Vernetzung des Silikonöls zu führen; d.h. diese Gruppen sind reaktiv, aber nicht vernetzend.

Analoges gilt für $C_1$ bis $C_{20}$ Hydrocarbylseitenketten und $C_1$ bis $C_{20}$ Alkylseitenketten.

In einer bevorzugten Ausführungsform enthält das Silikonöl ausschließlich Hydrocarbylseitenketten, noch bevorzugter ausschließlich Alkylseitenketten gemäß einer der o.g. Ausführungsformen.

Das Silikonöl weist vorzugsweise keine Alkoxyseitenketten auf. Die Abwesenheit von Alkoxyseitenketten kann durch Abwesenheit der symmetrischen Si-O-C-Streckschwingung im FTIR-Spektrum (940 bis 970 cm$^{-1}$) festgestellt werden.

Vorzugsweise weist das Silikonöl ein Molekulargewicht von 1000 bis 20000 g/mol auf, stärker bevorzugt sind 4000 bis 10000 g/mol.

Das Silikonöl weist vorzugsweise bei 25°C eine Viskosität von 20 bis 2000mPa·s auf, stärker bevorzugt sind 25 bis 1600mPa·s., noch bevorzugter 30 bis 1400mPa.s. Die Messung der Viskosität erfolgt beispielsweise mit einem Rotationsrheometer Anton Paar Rheolab QC.

Vorzugsweise enthält die Zusammensetzung nur Silikonöle, die die o.g. Eigenschaften in deren bevorzugten Ausführungsformen aufweisen.

In einer bevorzugten Ausführungsform der Erfindung wird lediglich Silikonöl als Hydrophobierungsmittel eingesetzt. Andere Polysiloxane oder Silikonharze sind vorzugsweise in der erfindungsgemäßen Zusammensetzung nicht enthalten. Daher wird erfindungsgemäß als Hydrophobierungsmittel vorzugsweise kein Silikonharz oder allgemeines Polysiloxan, sondern ein Silikonöl eingesetzt. Silikonharze als Hydrophobierungsmittel sind weniger bevorzugt, da Silikonharze in der Regel in Form von wässrigen oder lösemittelhaltigen Emulsionen oder Dispersionen vorliegen. Zur Emulgierung bzw. Dispergierung werden wiederum oberflächenaktive Substanzen wie Emulgatoren oder Dispergiermittel benötigt, die dann natürlich in die erfindungsgemäße Zusammensetzung eingeschleust werden.

Im Stand der Technik sind auch Entschäumer auf Silikonöl-Basis bekannt. Diese gehören jedoch nicht zu den erfindungsgemäß bevorzugt eingesetzten linearen Silikonölen. Vielmehr handelt es sich bei Entschäumern auf Silikonöl-Basis um Reaktionsprodukte oder Zusammensetzungen mit (amorphen) Kieselsäuren. Entschäumer bestehen aus oder enthalten oberflächenaktive Substanzen. Sie sind per se oberflächenaktiv und können deshalb keine hydrophobierende Wirkung aufweisen. Davon sind die erfindungsgemäß eingesetzten linearen Silikonöle zu unterscheiden, die eben keine Oberflächenaktivität aufweisen. Es sind auch Entschäumer erhältlich, die Silikonöl in geringen Mengen enthalten. Beispielhaft sei hier das Produkt *"Agitan 218"* der Fa. Münzing erwähnt. Aufgrund der Oberflächenaktivität haben solche Entschäumer keine hydrophobierenden Eigenschaften und sind nicht als erfindungsgemäß als Hydrophobierungsmittel eingesetzte Silikonöle anzusehen.

In einer Ausführungsform ist das Hydrophobierungsmittel auf Siloxan-Basis, vorzugsweise das lineare Silikonöl wie vorstehend beschrieben, in der Zusammensetzung in einer Menge von 0,05 bis 4,0 Gew.%, bezogen auf das Gesamtgewicht der Zusammensetzung, enthalten. In einer bevorzugten Ausführungsform ist das Hydrophobierungsmittel auf Siloxan-Basis, vorzugsweise das lineare Silikonöl, in der Zusammensetzung in einer Menge von 0,1 bis 3,0 Gew.%, stärker bevorzugt 0,1 bis 1,0 Gew.%, enthalten.

Die Zusammensetzung der vorliegenden Erfindung enthält ferner Wasser. In einer Ausführungsform enthält die Zusammensetzung Wasser in einer Menge von 10,0 bis 50,0 Gew.%, bezogen auf das Gesamtgewicht der Zusammensetzung. In einer bevorzugten Ausführungsform enthält die Zusammensetzung Wasser in einer Menge von 15,0 bis 40,0 Gew.%, stärker bevorzugt 15,0 bis 35,0 Gew.%.

Darüber hinaus kann die erfindungsgemäße Zusammensetzung auch weitere optionale Bestandteile enthalten. Zu diesen gehören übliche Additive, wie rheologische Additive, Verdicker, Topf- und Filmkonservierungsmittel, Biozide, Entschäumer, Netz- und Dispergiermittel, Pigmente, Farbmittel und/oder UV-Schutzmittel. Rheologische Additive, Verdicker, Topf- und Filmkonservierungsmittel, Biozide, Entschäumer, Netz- und Dispergiermittel, Pigmente, Farbmittel und UV-Schutzmittel sind im Stand der Technik bekannt und als Additive üblich. In einer Ausführungsform enthält die Zusammensetzung weiterhin Additive, ausgewählt aus rheologischen Additiven, Verdickern, Topf- und Filmkonservierungsmitteln, Bioziden, Entschäumern, Netz- und Dispergiermitteln, Pigmenten, Farbmitteln und/oder UV-Schutzmitteln, in einer Gesamtmenge von 0,1 bis 10,0 Gew.%, bezogen auf das Gesamtgewicht der Zusammensetzung. In einer bevorzugten Ausführungsform enthält die Zusammensetzung Additive, ausgewählt aus rheologischen Additiven, Verdickern, Topf- und Filmkonservierungsmitteln, Bioziden, Entschäumern, Netz- und Dispergiermitteln, Pigmenten, Farbmitteln und/oder UV-Schutzmitteln, in einer Gesamtmenge von 0,2 bis 8,0 Gew.%, bezogen auf das Gesamtgewicht der Zusammensetzung, stärker bevorzugt in einer Gesamtmenge von 0,5 bis 5,0 Gew.% beträgt.

In einer bevorzugten Ausführungsform besteht die erfindungsgemäße Zusammensetzung im Wesentlichen aus den vorstehend genannten Bestandteilen in den unmittelbar genannten Mengen. In einer weiter bevorzugten Ausführungsform besteht die erfindungsgemäße Zusammensetzung aus den vorstehend genannten Bestandteilen in den vorstehend genannten Mengen.

In einer bevorzugten Ausführungsform ist die Zusammensetzung der Erfindung im Wesentlichen frei ist von Verstärkungs- oder Armierungsfasern. Verstärkungs- bzw. Armierungsfasern zur Verwendung in z.B. einer Spachtelmasse, etc. sind im Stand der Technik im Prinzip bekannt. Illustrative Beispiele davon beinhalten Glasfasern, Kohlenstofffasern, Keramikfasern, Aramidfasern, Borfasern, Basaltfasern, Stahlfasern, Naturfasern oder Nylonfasern. Gemäß einer bevorzugten Ausführungsform der vorliegenden Erfindung wird die Verwendung dieser bekannten Verstärkungs- und Armierungsfasern allerdings im Wesentlichen ausgeschlossen. Der Begriff *"im Wesentlichen frei"* gemäß der Erfindung bedeutet in diesem Zusammenhang, dass auf eine bewusste Zugabe von Verstärkungs- oder Armierungsfasern verzichtet wird und/oder dass der Gehalt an Verstärkungs- oder Armierungsfasern in der Zusammensetzung bei weniger als 0,1 Gew.%, bezogen auf das Gesamtgewicht der Zusammensetzung, wie etwa 0,05 Gew.% oder weniger oder 0,01 Gew.% oder weniger, liegt. Auf die Verwendung von Verstärkungs- oder Armierungsfasern wird erfindungsgemäß vorzugsweise im Wesentlichen verzichtet, da es andernfalls bei verschiedenen Spritzapplikationstechniken zum Verstopfen der Spritzdüse kommen kann.

In einer weiteren Ausführungsform ist die Zusammensetzung im Wesentlichen frei ist von Wasserglas. Die Verwendung von Wasserglas als mineralisches Bindemittel ist im Stand der Technik bekannt. Gängige Beispiele davon umfassen Natrium-, Kalium- oder Lithiumwasserglas oder Gemische davon. Gemäß einer bevorzugten Ausführungsform der vorliegenden Erfindung wird die Verwendung von Wasserglas allerdings im Wesentlichen ausgeschlossen. Der Begriff *"im Wesentlichen frei"* gemäß der Erfindung bedeutet auch in diesem Zusammenhang, dass auf eine bewusste Zugabe von Wasserglas zu der Zusammensetzung verzichtet wird und/oder dass der Gehalt an Wasserglas in der Zusammensetzung bei weniger als 0,1 Gew.%, bezogen auf das Gesamtgewicht der Zusammensetzung, wie etwa 0,05 Gew.% oder weniger oder 0,01 Gew.% oder weniger, liegt. Wasserglas ist relativ spröde und steif. Deshalb leidet die Flexibilität und Elastizität der ausgehärten/getrockneten Zusammensetzung bei Zugabe von Wasserglas. Außerdem ist Wasserglas ist sehr hydrophil und verstärkt die Wasseraufnahme bzw. Wasserdurchlässigkeit, was ebenfalls nicht erwünscht ist.

In einer Ausführungsform betrifft die vorliegende Erfindung eine Zusammensetzung, wobei die Zusammensetzung umfasst:

mindestens ein organisches Polymer-Bindemittel in einer Gesamtmenge von 1,0 Gew.% bis 12,0 Gew.%, bezogen auf den Feststoffgehalt des organischen Polymer-Bindemittels und das Gesamtgewicht der Zusammensetzung, eine mindestens bimodale Füllstoffkombination in einer Gesamtmenge von 40,0 bis 90,0 Gew.%, bezogen auf das Gesamtgewicht der Zusammensetzung, wobei die mindestens bimodale Füllstoffkombination umfasst, vorzugsweise im Wesentlichen besteht aus, stärker bevorzugt besteht aus

mindestens einem Feinfüllstoff (A) mit einen Medianwert der Partikelgröße $D_{50}$ von mehr als 15 $\mu$m bis 40 $\mu$m in einer Gesamtmenge von 4,0 bis 40,0 Gew.%, bezogen auf das Gesamtgewicht der Zusammensetzung, und mindestens einem Feinstfüllstoff (B) mit einen Medianwert der Partikelgröße $D_{50}$ von 1,0 $\mu$m bis 15 $\mu$m in einer Gesamtmenge von 20,0 bis 75,0 Gew.%, bezogen auf das Gesamtgewicht der Zusammensetzung,

ein Hydrophobierungsmittel auf Siloxan-Basis in einer Menge von 0,05 bis 4,0 Gew.%, bezogen auf das Gesamtgewicht der Zusammensetzung, Wasser in einer Menge von 10,0 bis 50,0 Gew.%, bezogen auf das Gesamtgewicht der Zusammensetzung, und gegebenenfalls Additiven, ausgewählt aus rheologischen Additiven, Verdickern, Topf- und Filmkonservierungsmitteln, Bioziden, Entschäumern, Netz- und Dispergiermitteln, Pigmenten, Farbmitteln und/oder UV-Schutzmitteln, in einer Gesamtmenge, bezogen auf das Gesamtgewicht der Zusammensetzung, von bis zu 10,0 Gew.%.

In einer bevorzugten Ausführungsform besteht die erfindungsgemäße Zusammensetzung im Wesentlichen aus den unmittelbar vorstehend genannten Bestandteilen in den unmittelbar vorstehend genannten Mengen. In einer weiter bevorzugten Ausführungsform besteht die erfindungsgemäße Zusammensetzung aus den unmittelbar vorstehend genannten Bestandteilen in den unmittelbar vorstehend genannten Mengen.

In einer bevorzugten Ausführungsform betrifft die vorliegende Erfindung eine Zusammensetzung, wobei die Zusammensetzung umfasst:

mindestens ein organisches Polymer-Bindemittel in einer Gesamtmenge von 2,0 Gew.% bis 10,0 Gew.%, bezogen auf den Feststoffgehalt des organischen Polymer-Bindemittels und das Gesamtgewicht der Zusammensetzung, eine mindestens bimodale Füllstoffkombination in einer Gesamtmenge von 45,0 bis 85,0 Gew.%, bezogen auf das Gesamtgewicht der Zusammensetzung, wobei die mindestens bimodale Füllstoffkombination umfasst, vorzugsweise im Wesentlichen besteht aus, stärker bevorzugt besteht aus

mindestens einem Feinfüllstoff (A) mit einem Medianwert der Partikelgröße $D_{50}$ von 16,0 $\mu$m bis 32,0 $\mu$m in einer Gesamtmenge von 5,0 bis 30,0 Gew.%, bezogen auf das Gesamtgewicht der Zusammensetzung, und mindestens einem Feinstfüllstoff (B) mit einem Medianwert der Partikelgröße $D_{50}$ von 2,0 $\mu$m bis 14,0 $\mu$m in einer Gesamtmenge von 30,0 bis 70,0 Gew.%, bezogen auf das Gesamtgewicht der Zusammensetzung,

ein Hydrophobierungsmittel auf Siloxan-Basis in einer Menge von 0,1 bis 3,0 Gew.%, bezogen auf das Gesamtgewicht der Zusammensetzung, Wasser in einer Menge von 15,0 bis 40,0 Gew.%, bezogen auf das Gesamtgewicht der Zusammensetzung, vorzugsweise in einer Menge von 15,0 bis 40,0 Gew.%, und gegebenenfalls Additiven, ausgewählt aus rheologischen Additiven, Verdickern, Topf- und Filmkonservierungsmitteln, Bioziden, Entschäumern, Netz- und Dispergiermitteln, Pigmenten, Farbmitteln und/oder UV-Schutzmitteln, in einer Gesamtmenge, bezogen auf das Gesamtgewicht der Zusammensetzung, von bis zu 8,0 Gew.%.

In einer bevorzugten Ausführungsform besteht die erfindungsgemäße Zusammensetzung im Wesentlichen aus den unmittelbar vorstehend genannten Bestandteilen in den unmittelbar vorstehend genannten Mengen. In einer weiter bevorzugten Ausführungsform besteht die erfindungsgemäße Zusammensetzung aus den unmittelbar vorstehend genannten Bestandteilen in den unmittelbar vorstehend genannten Mengen.

In einer weiter bevorzugten Ausführungsform betrifft die vorliegende Erfindung eine Zusammensetzung, wobei die Zusammensetzung umfasst:

mindestens ein organisches Polymer-Bindemittel in einer Gesamtmenge von 3,0 Gew.% bis 8,0 Gew.%, bezogen auf den Feststoffgehalt des organischen Polymer-Bindemittels und das Gesamtgewicht der Zusammensetzung,
eine mindestens bimodale Füllstoffkombination in einer Gesamtmenge von 50,0 bis 80,0 Gew.%, bezogen auf das Gesamtgewicht der Zusammensetzung, wobei die mindestens bimodale Füllstoffkombination umfasst, vorzugsweise im Wesentlichen besteht aus, stärker bevorzugt besteht aus

mindestens einem Feinfüllstoff (A) mit einem Medianwert der Partikelgröße $D_{50}$ von 18,0 $\mu$m bis 28,0 $\mu$m in einer Gesamtmenge von 6,0 bis 20,0 Gew.%, bezogen auf das Gesamtgewicht der Zusammensetzung, und
mindestens einem Feinstfüllstoff (B) mit einem Medianwert der Partikelgröße $D_{50}$ von 3,0 $\mu$m bis 12,0 $\mu$m in einer Gesamtmenge von 40,0 bis 66,0 Gew.%, bezogen auf das Gesamtgewicht der Zusammensetzung,

ein Hydrophobierungsmittel auf Siloxan-Basis in einer Menge von 0,1 bis 1,0 Gew.%, bezogen auf das Gesamtgewicht der Zusammensetzung,
Wasser in einer Menge von 15,0 bis 35,0 Gew.%, bezogen auf das Gesamtgewicht der Zusammensetzung, und
gegebenenfalls Additiven, ausgewählt aus rheologischen Additiven, Verdickern, Topf- und Filmkonservierungsmitteln, Bioziden, Entschäumern, Netz- und Dispergiermitteln, Pigmenten, Farbmitteln und/oder UV-Schutzmitteln, in einer Gesamtmenge, bezogen auf das Gesamtgewicht der Zusammensetzung, von bis zu 5,0 Gew.%.

In einer bevorzugten Ausführungsform besteht die erfindungsgemäße Zusammensetzung im Wesentlichen aus den unmittelbar vorstehend genannten Bestandteilen in den unmittelbar vorstehend genannten Mengen. In einer weiter bevorzugten Ausführungsform besteht die erfindungsgemäße Zusammensetzung aus den unmittelbar vorstehend genannten Bestandteilen in den unmittelbar vorstehend genannten Mengen.

Die Zusammensetzung der vorliegenden Erfindung dient zur Herstellung eines Trockenfilms. Der Begriff *"Trockenfilm"* im Sinne der vorliegenden Erfindung bezieht sich auf eine dünne, d.h. ca. 2 mm bis 10 mm dicke, wie etwa 2 mm bis 5 mm dicke, selbsttragende Schicht, die sich durch Trocknen der Zusammensetzung in einer Form ergibt. Diese selbsttragende Schicht kann zu dekorativen Zwecken mit einem Untergrund bzw. Baumaterial verklebt werden. Illustrative Beispiele von Trockenfilmen im Sinne der Erfindung umfassen beispielsweise Paneele oder Furniere für Wand- oder Deckenverkleidungen, Laminate oder Tapeten, etc. Demgemäß betrifft die vorliegende Anmeldung auch einen Trockenfilm, erhältlich mittels der vorstehend beschriebenen, erfindungsgemäßen Zusammensetzung. In einer bevorzugten Ausführungsform betrifft die vorliegende Erfindung auch einen Trockenfilm, erhalten mittels vorstehend beschriebenen, erfindungsgemäßen der Zusammensetzung.

Die vorliegende Erfindung betrifft auch ein Verfahren zur Herstellung eines Trockenfilms. Das erfindungsgemäße Verfahren zur Herstellung des Trockenfilms umfasst mindestens die Schritte:

(a) Aufbringen der erfindungsgemäßen Zusammensetzung wie vorstehend beschrieben auf eine Negativ-Form, und
(b) Trocknen lassen der Zusammensetzung.

Dabei kann der Schritt (a) des Aufbringen der Zusammensetzung auf eine Negativ-Form auf eine beliebige, im Stand der Technik im Prinzip bekannte Weise durchgeführt werden, beispielsweise mittels Streichen, Bürsten, Spachteln, Aufspritzen mit Druckluft oder druckluftlosem Aufspritzen. In einer bevorzugten Ausführungsform wird der Schritt (a) des Aufbringen der Zusammensetzung auf eine Negativ-Form mittels druckluftlosem Aufspritzen durchgeführt. Druckluftloses Aufspritzen ist im Stand der Technik auch als Airlessspritzverfahren oder Airless bekannt. Airless bezeichnet ein Spritzverfahren, bei dem das Spritzmaterial ohne Luftzufuhr durch hohen Druck zerstäubt und auf eine Oberfläche, im vorliegenden Fall eine Negativ-Form, aufgebracht wird. Herkömmliche Spachtelmassen, die im Stand der Technik zum Einbringen in eine Negativ-Form verwendet werden, sind im Gegensatz zu den Zusammensetzungen der vorliegenden Erfindung typischerweise nicht airless spritzbar.

Die Form bzw. Negativ-Form zum Aufbringen der Zusammensetzung der Erfindung in Schritt (a) des Verfahrens ist erfindungsgemäß nicht besonders beschränkt. Es handelt sich um eine im Stand der Technik im Prinzip bekannte Form, in welche die Zusammensetzung der Erfindung eingebracht wird und dort bis zur Ausbildung eines selbsttragenden Films Trocknen gelassen wird. Beispielsweise kann es sich bei der Negativ-Form um eine Siliconschablone handeln. Nach der physikalischen Trocknung der Zusammensetzung in der Schablone erfolgt die Entschalung des Trockenfilms aus der Siliconform. Der selbsttragende Trockenfilm weist in der Regel eine Schichtdicke von 2 mm bis 10 mm, wie etwa 2 mm bis 5 mm, auf und kann nach der Entschalung auf ein gewünschtes Maß, wie beispielsweise 15 cm x 200 cm, zugeschnitten werden. Die auf diese Weise erhaltenen Trockenfilme können (z.B. zu dekorativen Zwecken) als Endbelag auf ein Baumaterial aufgebracht werden. Als Baumaterial kommen beispielsweise Wärmedämmverbundsysteme (WDVS) in Frage.

In einer bevorzugten Ausführungsform handelt es sich bei der Negativ-Form eine Negativ-Form zur Erzielung einer Holzimitatoberfläche.

Das Aufbringen der erfindungsgemäßen Zusammensetzung auf die Negativ-Form kann beispielsweise in einem 1-Schichtverfahren oder einem 2-Schichtverfahren erfolgen. Beim 2-Schichtverfahren erfolgt zunächst ein erster Spritzauftrag einer faserarmierten Fassadenfarbe auf Polymerbasis in die Negativ-Form. Anschließend erfolgt ein Nass-innass Auftrag der erfindungsgemäßen Zusammensetzung. Dieses 2-Schichtverfahren ergibt etwas mehr Sicherheit und Oberflächenqualität als das nachstehend beschriebene 1-Schichtverfahren.

Beim 1-Schichtverfahren wird die erfindungsgemäße Zusammensetzung direkt in die Negativ-Form eigebracht. Die erfindungsgemäße Zusammensetzung liefert dabei selbst beim 1-Schichtverfahren eine hohe Produktqualität mit porenfreien Oberflächen ohne "Nadelstichen".

Nach dem Aufbringen der Zusammensetzung auf die Negativ-Form wird gemäß dem erfindungsgemäßen Verfahren in einem weiteren Schritt die Zusammensetzung Trocknen gelassen. Der Trocknungsschritt kann als physikalische Trocknung bei Raumtemperatur oder bei erhöhter Temperatur durchgeführt werden. Nach der Trocknung können die erhaltenen Trockenfilme nachbehandelt werden, beispielsweise mit einer dekorativen Beschichtung, etwa einer Lasur, versehen werden.

Gemäß der vorliegenden Erfindung können Trockenfilme mit verbesserter Oberflächenqualität erhalten werden. Aufgrund der verwendeten Füllstoffkombination in Verbindung mit dem Hydrophobierungsmittel auf Siloxan-Basis, wie beispielsweise Silikonöl, das erfindungsgemäß auch oder in erster Linie als Weichmacher und Verlaufshilfe dient, resultieren flexible, elastische Trockenfilme mit niedriger Wasseraufnahme und guter Oberflächenausbildung. Ferner weisen die erhaltenen Trockenfilme ein gutes Brandverhalten auf. Ein weiterer Vorteil der vorliegenden Erfindung ist, dass die Trockenfilme in einem deutlich wirtschaftlicheren Herstellungsprozess hergestellt werden können, da automatisierte Verfahren, beispielsweise durch druckluftloses Aufspritzen im 1-Schicht- oder 2-Schichtverfahren möglich sind. Dadurch ergibt sich auch neben einem vermindertem Zeitaufwand auch ein geringerer Kraftaufwand der Produktionsmittarbeiter, was möglichen gesundheitlichen Langzeitfolgen vorbeugt.

**Beispiele**

Anhand eines konkreten Ausführungsbeispiels und eines Referenzbeispiels wird nachfolgend die vorliegende Erfindung näher erläutert. Das Ausführungsbeispiel beschreibt eine Zusammensetzung zum Aufbringen (z.B. airless) in eine Negativ-Form. Die Angabe der Bestandteile der Zusammensetzung in der nachstehenden Tabelle 1 erfolgt in Gew.%, bezogen auf das Gesamtgewicht der Zusammensetzung.

Tabelle 1:

|  | Ausführungsbeispiel | Referenzbeispiel |
|---|---|---|
| $CaCO_3$ ($D_{50}$: 8 $\mu$m) | 60,0 | 60,0 |
| Aluminiumhydroxid ($D_{50}$: 25 $\mu$m) | 10,0 | 10,0 |
| Polymerbindemittel auf Styrolacrylat-Basis (Feststoff) | 6,0 | 6,0 |
| Silikonöl | 0,5 | - |
| Paraffin-Wachs | - | 0,5 |
| Wasser | 21,0 | 21,0 |
| Additive* | 2,5 | 2,5 |
| Wasserdurchlässigkeit (DIN EN 1062-3) | <0,1 kg/(m$^2$*h$^{0,5}$) | <0,1 kg/(m$^2$*h$^{0,5}$) |
| PCS-Wert (DIN EN ISO 1716) | 1,7 MJ/kg | 1,9 MJ/kg |
| *: Additive umfassen hier Konservierungsmittel, Rheologieadditive, Entschäumer, Netz-/Dispergiermittel, etc. | | |

Die Zusammensetzung gemäß dem erfindungsgemäßen Ausführungsbeispiel ergibt einen Trockenfilm mit einer Wasseraufnahme (Wasserdurchlässigkeit nach DIN EN 1062-3) von weniger als 0,1 kg/(m$^2$*h$^{0,5}$). Ferner wird ein niedriger PCS-Wert (nach DIN EN ISO 1716) von 1,7 MJ/kg erhalten. Der aus der Zusammensetzung gemäß dem erfindungsgemäßen Ausführungsbeispiel resultierende Trockenfilm weist ferner eine sehr gute, makellose Oberflächenqualität ohne sichtbare Poren und *"Nadelstichen"* auf.

Im Referenzbeispiel wurde das erfindungsgemäß zu verwendende Hydrophobierungsmittel auf Siloxan-Basis durch handelsübliches Paraffin-Wachs ersetzt. Die Verwendung von Wachsen als Hydrophobierungsmittel ist im Stand der Technik gebräuchlich. Auch die Zusammensetzung gemäß dem Referenzbeispiel ergibt einen Trockenfilm mit einer geringen Wasseraufnahme (Wasserdurchlässigkeit nach DIN EN 1062-3) von weniger als 0,1 kg/(m$^2$*h$^{0,5}$). Allerdings wird ein erhöhter PCS-Wert (nach DIN EN ISO 1716) von 1,9 MJ/kg erhalten. Ferner weist der aus der Zusammensetzung gemäß dem vorstehenden Referenzbeispiel resultierende Trockenfilm eine sehr schlechte Oberflächenqualität mit einer Vielzahl von deutlich sichtbaren Poren und *"Nadelstichen"* auf.

## Patentansprüche

1.   Zusammensetzung, umfassend

   (a) mindestens ein organisches Polymer-Bindemittel,
   (b) eine mindestens bimodale Füllstoffkombination mit

   (i) mindestens einem Feinfüllstoff (A) mit einen Medianwert der Partikelgröße $D_{50}$, bestimmt gemäß DIN ISO 9276-1:2004-09 und ISO 9276-2:2014-05, von mehr als 15 μm bis 40 μm, und
   (ii) mindestens einem Feinstfüllstoff (B) mit einen Medianwert der Partikelgröße $D_{50}$ von 1,0 μm bis 15 μm,

   (c) ein Hydrophobierungsmittel auf Siloxan-Basis, und
   (d) Wasser.

2.   Zusammensetzung gemäß Anspruch 1, wobei das mindestens eine organische Polymer-Bindemittel ausgewählt ist aus organischen Polymer-Bindemittel auf Basis von Vinylacetat/Ethylen-Copolymeren, Copolymeren auf Basis von Vinylaromaten, und/oder Homo- oder Copolymeren auf Basis von (Meth)acrylaten, und wobei das mindestens eine organische Polymer-Bindemittel *vorzugsweise* ausgewählt ist aus Homo- oder Copolymeren auf Basis von Reinacrylaten und/oder auf Basis von Styrolacrylatcopolymeren, und/oder
   wobei das mindestens eine organische Polymer-Bindemittel in der Zusammensetzung in einer Gesamtmenge von 1,0 Gew.% bis 12,0 Gew.%, bezogen auf den Feststoffgehalt des organischen Polymer-Bindemittels und das Gesamtgewicht der Zusammensetzung, vorhanden ist, *vorzugsweise* in einer Gesamtmenge von 2,0 Gew.% bis 10,0 Gew.%, *stärker bevorzugt* in einer Gesamtmenge von 3,0 Gew.% bis 8,0 Gew.%.

3.   Zusammensetzung gemäß Anspruch 1 oder Anspruch 2, wobei die mindestens bimodale Füllstoffkombination in der Zusammensetzung in einer Gesamtmenge von 40,0 bis 90,0 Gew.%, bezogen auf das Gesamtgewicht der Zusammensetzung, vorhanden ist, *vorzugsweise* in einer Gesamtmenge von 45,0 bis 85,0 Gew.%, *stärker bevorzugt* 50,0 bis 80,0 Gew.%.

4.   Zusammensetzung gemäß einem der Ansprüche 1 bis 3, wobei der mindestens eine Feinfüllstoff (A) in der Zusammensetzung in einer Gesamtmenge von 4,0 bis 40,0 Gew.%, bezogen auf das Gesamtgewicht der Zusammensetzung, vorhanden ist, *vorzugsweise* in einer Gesamtmenge von 5,0 bis 30,0 Gew.%, *stärker bevorzugt* 6,0 bis 20,0 Gew.%,
   und/oder

   wobei der mindestens eine Feinfüllstoff (A) einen Medianwert der Partikelgröße $D_{50}$ von 16,0 μm bis 32,0 μm aufweist, *vorzugsweise* 18,0 μm bis 28,0 μm,
   und/oder
   wobei der mindestens eine Feinfüllstoff (A) ausgewählt ist aus silikatischen, karbonatischen, oxidischen, hydroxidischen und/oder sulfatischen Füllstoffen, *vorzugsweise* aus karbonatischen und/oder hydroxidischen Füllstoffen,
   und/oder
   wobei der mindestens eine Feinfüllstoff (A) eine Mohs-Härte von 4,0 oder weniger aufweist, *vorzugsweise* von 3,5 oder weiniger, *stärker bevorzugt* 3,0 oder weniger,
   und/oder
   wobei der mindestens eine Feinfüllstoff (A) einen PCS-Wert von 0 MJ/kg oder weniger aufweist, *vorzugsweise* einen PCS-Wert -0,3 MJ/kg oder weniger, *stärker bevorzugt* von -0,4 MJ/kg oder weniger, *noch stärker bevorzugt*

von -0,5 MJ/kg.

5. Zusammensetzung gemäß einem der Ansprüche 1 bis 4, wobei der mindestens eine Feinstfüllstoff (B) in der Zusammensetzung in einer Gesamtmenge von 20,0 bis 75,0 Gew.%, bezogen auf das Gesamtgewicht der Zusammensetzung, vorhanden ist, *vorzugsweise* in einer Gesamtmenge von 30,0 bis 70,0 Gew.%, *stärker bevorzugt* 40,0 bis 66,0 Gew.%,
und/oder

wobei der mindestens eine Feinstfüllstoff (B) einen Medianwert der Partikelgröße $D_{50}$ von 2,0 $\mu$m bis 14,0 $\mu$m aufweist, *vorzugsweise* 3,0 $\mu$m bis 12,0 $\mu$m,
und/oder
wobei der mindestens eine Feinstfüllstoff (B) ausgewählt ist aus silikatischen, karbonatischen, oxidischen, hydroxidischen und/oder sulfatischen Füllstoffen, *vorzugsweise* karbonatischen und/oder hydroxidischen Füllstoffen,
und/oder
wobei der mindestens eine Feinstfüllstoff (B) eine Mohs-Härte von 4,0 oder weniger aufweist, vorzugsweise von 3,5 oder weiniger, stärker bevorzugt 3,0 oder weniger,
wobei der mindestens eine Feinstfüllstoff (B) einen PCS-Wert von 0 MJ/kg oder weniger aufweist, *vorzugsweise* einen PCS-Wert -0,5 MJ/kg oder weniger, *stärker bevorzugt* von -0,6 MJ/kg oder weniger, *noch stärker bevorzugt* von -0,7 MJ/kg.

6. Zusammensetzung gemäß einem der Ansprüche 1 bis 5, wobei das Gewichtsverhältnis der Gesamtmasse des Feinfüllstoffs (A) in der Zusammensetzung zu der Gesamtmasse des Feinstfüllstoffs (B) in der Zusammensetzung 1 : 1-15 beträgt, und wobei *vorzugsweise* das Gewichtsverhältnis der Gesamtmasse des Feinfüllstoffs (A) in der Zusammensetzung zu der Gesamtmasse des Feinstfüllstoffs (B) in der Zusammensetzung 1 : 2-12, *stärker bevorzugt* 1 : 3-8, wie beispielsweise 1 : 6, beträgt,
und/oder

wobei das Volumenverhältnis des Gesamtvolumens des Feinfüllstoffs (A) in der Zusammensetzung zu dem Gesamtvolumen des Feinstfüllstoffs (B) in der Zusammensetzung 1 : 1-15 beträgt, und wobei *vorzugsweise* das Volumenverhältnis des Gesamtvolumens des Feinfüllstoffs (A) in der Zusammensetzung zu dem Gesamtvolumen des Feinstfüllstoffs (B) in der Zusammensetzung 1 : 2-12, *stärker bevorzugt* 1 : 3-8, wie beispielsweise 1 : 6, beträgt,
und/oder
wobei der Medianwert der Partikelgröße $D_{50}$ des Feinstfüllstoffs (B) 0,155 bis 0,414 des Medianwerts der Partikelgröße $D_{50}$ des Feinfüllstoffs (A) beträgt, und wobei vorzugsweise der Medianwert der Partikelgröße $D_{50}$ des Feinstfüllstoffs (B) 0,225 bis 0,414, stärker bevorzugt 0,225 bis 0,291 des Medianwerts der Partikelgröße $D_{50}$ des Feinfüllstoffs (A) beträgt,
und/oder
wobei die mittlere Gesamt-Ölzahl aller Füllstoffe in der Zusammensetzung 22 g/100g oder weniger beträgt, *vorzugsweise* 20 g/100g oder weniger, *stärker bevorzugt* 18 g/100g oder weniger.

7. Zusammensetzung gemäß einem der Ansprüche 1 bis 6, wobei das Hydrophobierungsmittel auf Siloxan-Basis ausgewählt ist aus Polysiloxanen in Form von Silikonharzen oder Silikonölen, *vorzugsweise* linearen Silikonölen, und/oder
wobei das Hydrophobierungsmittel auf Siloxan-Basis in der Zusammensetzung in einer Menge von 0,05 bis 4,0 Gew.%, bezogen auf das Gesamtgewicht der Zusammensetzung, vorhanden ist, *vorzugsweise* in einer Menge von 0,1 bis 3,0 Gew.%, *stärker bevorzugt* 0,1 bis 1,0 Gew.%.

8. Zusammensetzung gemäß einem der Ansprüche 1 bis 7, wobei die Zusammensetzung, bezogen auf das Gesamtgewicht der Zusammensetzung, Wasser in einer Menge von 10,0 bis 50,0 Gew.%, *vorzugsweise* 15,0 bis 40,0 Gew.%, stärker bevorzugt 15,0 bis 35,0 Gew.% enthält.

9. Zusammensetzung gemäß einem der Ansprüche 1 bis 8, wobei die Zusammensetzung weiterhin Additive enthält, die ausgewählt sind aus rheologischen Additiven, Verdickern, Topf- und Filmkonservierungsmitteln, Bioziden, Entschäumern, Netz- und Dispergiermitteln, Pigmenten, Farbmitteln und/oder UV-Schutzmitteln, wobei die Gesamtmenge dieser Additive in der Zusammensetzung, bezogen auf das Gesamtgewicht der Zusammensetzung, 0,1 bis 10,0 Gew.%, *vorzugsweise* 0,2 bis 8,0 Gew.%, *stärker bevorzugt* 0,5 bis 5,0 Gew.% beträgt.

10. Zusammensetzung gemäß einem der Ansprüche 1 bis 9, wobei die Zusammensetzung weiterhin im Wesentlichen frei ist von Verstärkungs- oder Armierungsfasern,
und/oder
wobei die Zusammensetzung weiterhin im Wesentlichen frei ist von Wasserglas.

11. Zusammensetzung gemäß einem der Ansprüche 1 bis 10, wobei die Zusammensetzung umfasst, *vorzugsweise* im Wesentlichen besteht aus, *stärker bevorzugt* besteht aus:

mindestens ein organisches Polymer-Bindemittel in einer Gesamtmenge von 1,0 Gew.% bis 12,0 Gew.%, bezogen auf den Feststoffgehalt des organischen Polymer-Bindemittels und das Gesamtgewicht der Zusammensetzung, *vorzugsweise* in einer Gesamtmenge von 2,0 Gew.% bis 10,0 Gew.%, *stärker bevorzugt* in einer Gesamtmenge von 3,0 Gew.% bis 8,0 Gew.%,
eine mindestens bimodale Füllstoffkombination in einer Gesamtmenge von 40,0 bis 90,0 Gew.%, bezogen auf das Gesamtgewicht der Zusammensetzung, *vorzugsweise* in einer Gesamtmenge von 45,0 bis 85,0 Gew.%, *stärker bevorzugt* 50,0 bis 80,0 Gew.%, wobei die mindestens bimodale Füllstoffkombination umfasst, *vorzugsweise* im Wesentlichen besteht aus, *stärker bevorzugt* besteht aus

mindestens einem Feinfüllstoff (A) in einer Gesamtmenge von 4,0 bis 40,0 Gew.%, bezogen auf das Gesamtgewicht der Zusammensetzung, *vorzugsweise* in einer Gesamtmenge von 5,0 bis 30,0 Gew.%, *stärker bevorzugt* 6,0 bis 20,0 Gew.%, und
mindestens einem Feinstfüllstoff (B) in einer Gesamtmenge von 20,0 bis 75,0 Gew.%, bezogen auf das Gesamtgewicht der Zusammensetzung, *vorzugsweise* in einer Gesamtmenge von 30,0 bis 70,0 Gew.%, *stärker bevorzugt* 40,0 bis 66,0 Gew.%,

ein Hydrophobierungsmittel auf Siloxan-Basis in einer Menge von 0,05 bis 4,0 Gew.%, bezogen auf das Gesamtgewicht der Zusammensetzung, *vorzugsweise* in einer Menge von 0,1 bis 3,0 Gew.%, *stärker bevorzugt* 0,1 bis 1,0 Gew.%,
Wasser in einer Menge von 10,0 bis 50,0 Gew.%, bezogen auf das Gesamtgewicht der Zusammensetzung, *vorzugsweise* in einer Menge von 15,0 bis 40,0 Gew.%, *stärker bevorzugt* 15,0 bis 35,0 Gew.%, und
gegebenenfalls Additiven, ausgewählt aus rheologischen Additiven, Verdickern, Topf- und Filmkonservierungsmitteln, Bioziden, Entschäumern, Netz- und Dispergiermitteln, Pigmenten, Farbmitteln und/oder UV-Schutzmitteln, in einer Gesamtmenge, bezogen auf das Gesamtgewicht der Zusammensetzung, von bis zu 10,0 Gew.%, *vorzugsweise* in einer Gesamtmenge von 0,1 bis 10,0 Gew.%, *stärker bevorzugt* 0,2 bis 8,0 Gew.%, *noch stärker bevorzugt* 0,5 bis 5,0 Gew.%.

12. Trockenfilm, erhältlich mittels der Zusammensetzung nach einem der Ansprüche 1 bis 11, *vorzugsweise* erhalten mittels der Zusammensetzung nach einem der Ansprüche 1 bis 11.

13. Verfahren zur Herstellung eines Trockenfilms, wobei das Verfahren umfasst:

(a) Aufbringen der Zusammensetzung nach einem der Ansprüche 1 bis 11 auf eine Negativ-Form, und
(b) Trocknen lassen der Zusammensetzung.

14. Verfahren gemäß Anspruch 13, wobei der Schritt (a) des Aufbringen der Zusammensetzung auf eine Negativ-Form mittels Streichen, Bürsten, Spachteln, Aufspritzen mit Druckluft oder druckluftlosem Aufspritzen durchgeführt wird, und wobei *vorzugsweise* Schritt (a) mittels druckluftlosem Aufspritzen durchgeführt wird.

15. Verfahren gemäß Anspruch 13 oder Anspruch 14, wobei die Negativ-Form eine Negativ-Form zur Erzielung einer Holzimitatoberfläche ist.

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 712 216 A1 (BK GIULINI GMBH [DE]) 23. September 2020 (2020-09-23) * Absätze [0054], [0061]; Beispiel 3 * ----- | 1-15 | INV. C09D5/02 C09D7/61 C09D7/40 C09D5/34 |
| X | EP 3 974 479 A1 (DAW SE [DE]) 30. März 2022 (2022-03-30) * Absätze [0040], [0048], [0060], [0061]; Ansprüche 1-26 * ----- | 1-15 | |
| X | EP 3 156 382 A1 (DAW SE [DE]) 19. April 2017 (2017-04-19) * Absätze [0013], [0014], [0017], [0018], [0034] - [0037], [0054], [0059]; Ansprüche 1-25 * ----- | 1-15 | |
| X | US 2007/232736 A1 (LAFARGE PLATRES [FR]) 4. Oktober 2007 (2007-10-04) * Absätze [0019] - [0039]; Ansprüche 1-29; Beispiele 1-12 * ----- | 1-15 | |

RECHERCHIERTE
SACHGEBIETE (IPC)

C09D
C08K

Der vorliegende Recherchenbericht wurde für alle Patentansprüche erstellt

| Recherchenort | Abschlußdatum der Recherche | Prüfer |
|---|---|---|
| München | 4. November 2025 | Schmitt, Johannes |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 18 4924

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-11-2025

| Im Recherchenbericht angeführtes Patentdokument | Datum der Veröffentlichung | Mitglied(er) der Patentfamilie | Datum der Veröffentlichung |
|---|---|---|---|
| EP 3712216 A1 | 23-09-2020 | DK 3712216 T3 | 13-02-2023 |
| | | EP 3712216 A1 | 23-09-2020 |
| | | ES 2937968 T3 | 03-04-2023 |
| | | FI 3712216 T3 | 08-03-2023 |
| | | PL 3712216 T3 | 12-06-2023 |
| | | PT 3712216 T | 13-02-2023 |
| EP 3974479 A1 | 30-03-2022 | KEINE | |
| EP 3156382 A1 | 19-04-2017 | KEINE | |
| US 2007232736 A1 | 04-10-2007 | AU 2005251974 A1 | 22-12-2005 |
| | | CA 2565674 A1 | 22-12-2005 |
| | | CN 1950310 A | 18-04-2007 |
| | | DE 602004010235 T2 | 02-10-2008 |
| | | EP 1593659 A1 | 09-11-2005 |
| | | EP 1744996 A1 | 24-01-2007 |
| | | ES 2295797 T3 | 16-04-2008 |
| | | KR 20070005718 A | 10-01-2007 |
| | | PL 1593659 T3 | 31-03-2008 |
| | | PT 1593659 E | 14-02-2008 |
| | | US 2007232736 A1 | 04-10-2007 |
| | | WO 2005121040 A1 | 22-12-2005 |

EPO FORM P0461

Für nähere Einzelheiten zu diesem Anhang : siehe Amtsblatt des Europäischen Patentamts, Nr.12/82